# EUROPÄISCHE PATENTANMELDUNG

(11) **EP 1 925 847 A1**
(43) Veröffentlichungstag der Anmeldung: **28.05.2008**
(21) Anmeldenummer: 06124529.6
(22) Anmeldetag: 22.11.2006
(51) Int. Cl.: F16F 15/10, G10K 11/16

(54) **Schallgedämpftes Schwungrad**

(71) Anmelder: Ford Global Technologies, LLC, Dearborn, MI 48126 (US)
(72) Erfinder: Bruendel, Ralph Peter, 45239, Essen (DE)
(74) Vertreter: Drömer, Hans-Carsten

(57) **Zusammenfassung**

Die Erfindung betrifft ein Bauteil (1), das um eine Drehachse (2) rotierbar ist. Das Bauteil (1) weist zumindest eine freie Oberfläche (3) auf. An der zumindest einen freien Oberfläche (3) ist zumindest ein schalldämpfendes Element (4) angeordnet.

## Beschreibung

Die Erfindung betrifft ein Bauteil, das um eine Drehachse rotierbar ist, wobei das Bauteil zumindest eine freie Oberfläche aufweist.

Ein solches, um seine Drehachse rotierbares Bauteil kann beispielsweise ein Schwungrad eines Verbrennungsmotors sein. Dieses beispielhafte Schwungrad wirkt in einigen Situationen wie eine akustische Glocke. Hierbei werden axiale und auch radiale Anregungen von dem Verbrennungsmotor bzw. seiner Kurbelwelle in das beispielhaft genannte Schwungrad übertragen, so daß dieses in Vibrationen versetzt bzw. über seine freie Oberfläche Luftschall bzw. Körperschall ausgestrahlt wird.

Das Abstrahlen von Schall (Luftschall, Körperschall) führt zu erheblichen Schallbelästigungen innerhalb eines Fahrzeugraumes bzw. Insassenraumes eines Fahrzeugs. In einer bestimmten Übertragungsanordnung bzw. Kombination des Schwungrades mit der Kurbelwelle führt dies, wie nachteiliger weise beobachtet wird, zu einer Lärmbelästigung im Innenraum des Kraftfahrzeuges in einem Frequenzbereich von 4 bis 6 kHz. Dieses Geräusch wird von den Fahrzeuginsassen z. B. als "klingelndes Geräusch" wahrgenommen. In Untersuchungen wurde festgestellt, daß das beispielhaft genannte Schwungrad als Geräuschquelle fungiert. Dabei wurden Verbrennungsgeräusche des Verbrennungsmotors, sowie selbstinduzierte Geräusche vom Schwungrad und Rassel- und Rattergeräusche eines Getriebe-Kupplungssystems von der Oberfläche des Schwungrades ausgestrahlt. All dies zusammen, insbesondere die Abstrahlung des Körperschalls bzw. Luftschalls durch das Schwungrad, bewirkt eine Verschlechterung der Geräuschverhältnisse bzw. Geräuschqualität sowohl im Innenraum als auch außerhalb des Kraftfahrzeugs. Damit verbunden ist eine zu erwartende Verschlechterung der Kundenzufriedenheit.

Der Erfindung liegt die Aufgabe zugrunde, ein Bauteil der Eingangs genannten Art mit einfachen Mitteln dahingehend zu verbessern, daß die Geräuschbelästigung durch das sich drehende bzw. rotierbare Bauteil verringert ist.

Erfindungsgemäß wird die Aufgabe dadurch gelöst, daß an der zumindest einen freien Oberfläche zumindest ein schalldämpfendes Element angeordnet ist.

Günstiger Weise wird somit die Geräuschabstrahlung und dadurch entstehende Geräuschbelästigung durch das sich drehende bzw. rotierbare Bauteil verringert. Vorteilhafterweise reduziert das an der zumindest einen freien Oberfläche angeordnete schalldämpfende Element Schwingungsamplituden von spezifischen Resonanzfrequenzen eines beispielhaften Schwungrades bis zu 23 dB, ohne die Frequenzen weiterer Resonanzstellen signifikant zu verändern. Günstigerweise werden Frequenzen oberhalb 3 kHz gedämpft, wobei geringere Frequenzen nicht beeinflußt werden.

Hierdurch wird insgesamt die Lärmbelästigung sowohl in einem Innenraum als auch im Außenbereich eines Fahrzeuges erheblich reduziert, da eine Schallabstrahlung über das bedämpfte, beispielhaft genannte Schwungrad erheblich minimiert ist. Die Geräuschqualität in dem Fahrzeuginnenraum wird merklich verbessert, wodurch sich auch das Wohlbefinden der Fahrzeuginsassen erhöht bzw. die vorher wahrgenommenen Belästigungen, insbesondere Geräuschbelästigungen, nicht mehr negativ wahrgenommen werden.

Vorteilhaft ist weiter, daß das schalldämpfende Element eine Schallreduzierung insbesondere dann bewirkt, wenn sich das Bauteil in Betrieb befindet, d. h. wenn das Bauteil um seine Drehachse rotiert.

In einer bevorzugten Ausgestaltung des erfindungsgemäßen Bauteils erstreckt sich die zumindest eine freie Oberfläche von der Drehachse in Richtung zu einer Stirnseite des Bauteils, so daß ein scheibenartiges Bauteil gebildet ist. Günstigerweise ist hierbei die zumindest eine freie Oberfläche als Seitenfläche ausgeführt, wobei das schalldämpfende Element in Radialrichtung der Seitenfläche gesehen dieser zumindest bereichsweise zugeordnet ist. Natürlich kann das rotierbare Bauteil zwei einander gegenüberliegende Seitenflächen aufweisen, so daß das schalldämpfende Element jeder Seitenfläche zugeordnet sein kann.

In einer ersten bevorzugten Ausgestaltung ist das schalldämpfende Element als einteiliger Kreisring ausgeführt, wobei aber vorteilhafterweise auch vorgesehen werden kann, daß das schalldämpfende Element als Kreisringsegment ausgeführt ist, so daß mehrere schalldämpfende Elemente der zumindest einen freien Oberfläche zugeordnet sind, und so daß sich in der Gesamtheit der zusammengesetzten Kreisringelemente bevorzugt ein komplett ausgebildeter Kreisring ergibt.

Um eine hinreichende Schalldämmung zu erreichen, ist vorteilhafterweise vorgesehen, daß das schalldämpfende Element aus einem Verbundwerkstoff gebildet ist, wobei das schalldämpfende Element aus einem Metallkunststoffverbund bevorzugt aus einem Metall-Gummi-Verbundwerkstoff gebildet sein kann. Selbstverständlich kann das schalldämpfende Element aber auch aus anderen geeigneten schalldämpfenden Werkstoffen bestehen, wie z. B. Mischwerkstoffe, insbesondere Faserverbundwerkstoffe.

In bevorzugter Ausgestaltung ist das schalldämpfende Element mit der zumindest einen freien Oberfläche verbunden, bevorzugt verklebt. Als Klebmittel kann beispielsweise ein Silikon, ein Phenolharz oder ein druckintensiver Klebstoff (Pressure Sensitive Adhesive; PSA) eingesetzt werden. Insbesondere der PSA ist ein hoch qualitativer, kaltbindender Klebstoff. Die Kleberichtlinie bzw. das Vorgehen zum Verkleben des schalldämpfenden Elementes mit der zumindest einen freien Oberfläche, die bevorzugt aus einem Metall besteht, hängt von der Herstellungsrichtlinie des Herstellers des Bindemittels ab. Zur Sicherung gegen Entfernen kann eine mechanische Verbindung vorgesehen werden.

Wie bereits oben beschrieben, ist das Bauteil bevorzugt als Schwungrad eines Verbrennungsmotors ausgeführt, wobei derartige Verbrennungsmotoren beispielsweise auf Schiffen, in Zügen und Produktionsmaschinen, insbesondere aber auch in Kraftfahrzeugen, angeordnet sein können. Natürlich ist die Erfindung nicht auf das beispielhaft genannte Schwungrad beschränkt, sondern umfaßt jedes rotierbare Bauteil, bei der eine Geräuschabstrahlung (Körperschall, Luftschall) durch ein entsprechendes schalldämpfendes Element reduziert werden kann.

Körperschall im Sinne der Erfindung ist derjenige Schall, welcher sich in einem Festkörper ausbreitet. Der Körperschall kann beispielsweise in einem Verbrennungsmotor bis zum Schwungrad weitergeleitet werden. An der zumindest einen freien Oberfläche bzw. seiner Seitenfläche des rotierbaren Bauteils wandelt sich der Körperschall in Luftschall um, und wird erst dann vom menschlichen Gehör wahrgenommen.

Das auf dem rotierenden Bauteil aufgeklebte schalldämpfende Element verbessert die Geräuschqualität in dem Innenraum des Kraftfahrzeuges signifikant. Das schalldämpfende Element kann beispielsweise als mit einer geräuschdämmenden Schicht ausgeführtes Kreisringsegment bzw. Kreisring ausgeführt sein, wobei das schalldämpfende Element aber auch aus einem Sandwichmaterial hergestellt sein kann und bevorzugt mit der zumindest einen freien Oberfläche des beispielhaft genannten Schwungrades verklebt sein kann. Wie bereits durchgeführte Tests gezeigt haben, widersteht das schalldämpfende Element bzw. das bevorzugte Material Umdrehungs- bzw. Rotationsgeschwindigkeiten von bis zu 10.000 Umdrehungen pro Minute, wobei die Tests unter Temperaturbelastungen durchgeführt wurden und keine Fehlfunktionen festgestellt wurden. Wie bereits beschrieben, kann das schalldämpfende Element bevorzugt mit der zumindest einen freien Oberfläche verklebt werden, wobei aber auch vorteilhafterweise vorgesehen werden kann, daß das schalldämpfende Element mechanisch mit dem beispielhaft genannten Schwungrad verbunden werden kann, wobei aber auch eine Verklemmung zwischen zwei Bauteilen des Schwungrades vorgesehen werden kann.

Insgesamt ist die erfindungsgemäße Lösung, insbesondere das schalldämpfende Element, sehr einfach auf dem rotierbaren Bauteil zu installieren, wobei zusätzliche mechanische Befestigungen nicht notwendig sind. Das schalldämpfende Element kann bevorzugt aus einem auf Coils aufgerollten Grundmaterial (Flacheisen; Verbundmaterial) gestanzt werden, wobei natürlich auch andere Herstellungsarten bzw. Abtrennungsmöglichkeiten möglich sind.

Weitere vorteilhafte Ausgestaltungen der Erfindung sind in den Unteransprüchen unter folgenden Figurenbeschreibungen offenbart. Es zeigen:
- Fig. 1: ein Bauteil in Draufsicht mit zugeordnetem schalldämpfenden Element in einer ersten Ausgestaltung, und
- Fig. 2: das Bauteil aus Fig. 1 mit einem schalldämpfenden Element in einer zweiten Ausgestaltung.

In den unterschiedlichen Figuren sind gleiche Teile stets mit denselben Bezugszeichen versehen, weswegen diese in der Regel auch nur einmal beschrieben werden.

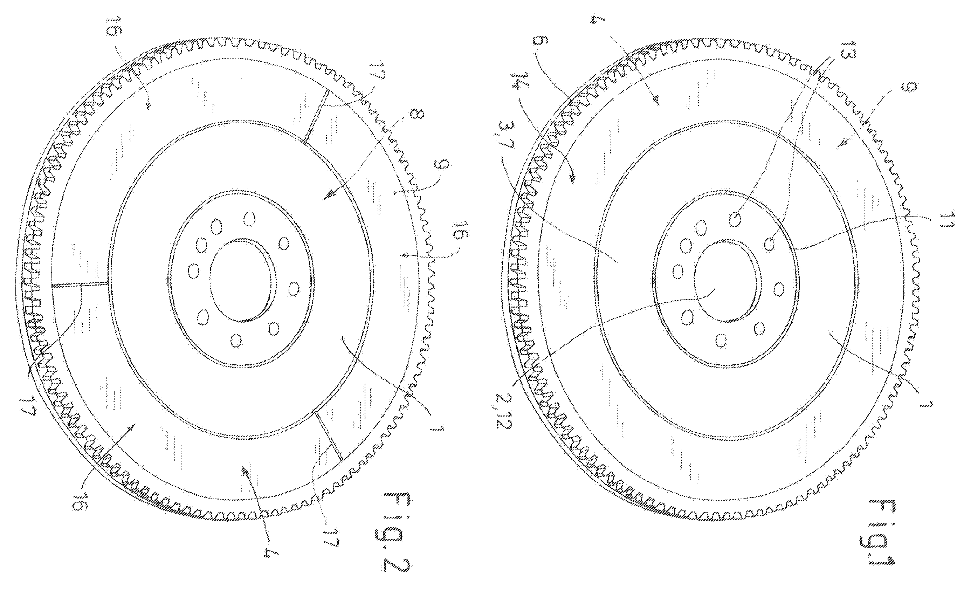

Figuren 1 und 2 zeigen ein Bauteil 1, das um eine Drehachse 2 rotierbar ist. Das Bauteil 1 weist zumindest eine freie Oberfläche 3 auf. An der zumindest einen freien Oberfläche 3 ist zumindest ein schalldämpfendes Element 4 angeordnet.

Das in den Figuren 1 und 2 beispielhaft dargestellte Bauteil 1 ist als Schwungrad eines Verbrennungsmotors, insbesondere eines Verbrennungsmotors eines Kraftfahrzeuges, ausgeführt.

Die zumindest eine freie Oberfläche 3 erstreckt sich von der Drehachse 2 in Richtung zu einer Stirnseite 6 des Bauteils 1, so daß ein scheibenartiges Bauteil 1 gebildet ist. An der Stirnseite 6 sind beispielhaft Verzahnungen angeordnet.

Die zumindest eine freie Oberfläche 3 ist als Seitenfläche 7 ausgeführt, wobei das schalldämpfende Element 4 in Radialrichtung der Seitenfläche 7 gesehen dieser zumindest bereichsweise zugeordnet ist.

Die Seitenfläche 7 weist in dem dargestellten Ausführungsbeispiel einen inneren Abschnitt 8 und einen äußeren Abschnitt 9 auf, wobei das schalldämpfende Element in dem dargestellten Ausführungsbeispiel dem äußeren Abschnitt 9 zugeordnet ist. Der innere Abschnitt 8 umfaßt einen Zentralbereich 11, welcher eine Durchgangsöffnung 12 zur Verbindung, beispielsweise mit einer Kurbelwelle des Verbrennungsmotors aufweist, wobei der Zentralbereich 11 verteilt angeordnete Befestigungsbohrungen 13 aufweist, durch welche geeignete Befestigungsmittel führbar sind.

Die Durchgangsöffnung 12 bildet zugleich die Drehachse 2.

In dem in Figur 1 dargestellten Ausführungsbeispiel ist das schalldämpfende Element 4 als einstückiger bzw. einteiliger Kreisring 14 ausgeführt, wobei das schalldämpfende Element 4 in dem Ausführungsbeispiel nach Figur 2 als Kreisringsegment 16 ausgeführt ist, so daß mehrere schalldämpfende Elemente 4 bzw. Kreisringsegmente 16 der zumindest einen freien Oberfläche 3 bzw. der Seitenfläche 7 zugeordnet sind, so daß der gesamten äußere Abschnitt 9 kreisringartig mit den in Figur 2 drei dargestellten schalldämpfenden Elementen 4 belegt ist, wobei zwischen den jeweils benachbarten schalldämpfenden Elementen 4 Trennfugen 17 vorhanden sind, die natürlich auch bei entsprechender Ausgestaltung der schalldämpfenden Elemente 4 entfallen können.

Natürlich ist das in dem in Figur 2 dargestellte Ausführungsbeispiel zur Ausgestaltung des schalldämpfenden Elementes 4 nicht auf die Zusammensetzung aus drei Kreisringsegmenten 16 beschränkt, vielmehr umfaßt die Erfindung auch Ausgestaltungen aus zwei oder mehr als drei Kreisringsegmenten 16.

In dem dargestellten Ausführungsbeispiel ist das schalldämpfende Element 4 bzw. der Kreisring 14 oder das Kreisringsegment 16 aus einem Verbundwerkstoff gebildet, wobei hier bevorzugt ein Metall-Gummi-Verbundwerkstoff vorgesehen ist. Das schalldämpfende Element 4 bzw. der Kreisring 14 oder die Kreisringsegmente 16 sind bevorzugt mit dem äußeren Abschnitt 9 des Bauteils 1 bzw. der Schwungscheibe bzw. des Schwungrades mit geeigneten Klebstoffen verbunden, können aber natürlich auch an dem inneren Abschnitt 8 angeordnet sein. Selbstverständlich kann auch die zur dargestellten Seitenfläche 7 gegenüberliegende, verdeckte Seitenfläche 7 entsprechend belegt sein.

## Patentansprüche

1. Bauteil, das um eine Drehachse (2) rotierbar ist, wobei das Bauteil (1) zumindest eine freie Oberfläche (3) aufweist, **dadurch gekennzeichnet, daß** an der zumindest einen freien Oberfläche(3) zumindest ein schalldämpfendes Element (4) angeordnet ist.

2. Bauteil nach Anspruch 1, **dadurch gekennzeichnet, daß** sich die zumindest eine freie Oberfläche (3) von der Drehachse (2) in Richtung zu einer Stirnseite (6) des Bauteils (1) erstreckt, so daß ein scheibenartiges Bauteil gebildet ist.

3. Bauteil nach Anspruch 1 oder 2, **dadurch gekennzeichnet, daß** die zumindest eine freie Oberfläche (3) als Seitenfläche (7) ausgeführt ist, wobei das schalldämpfende Element (4) in Radialrichtung der Seitenfläche (7) gesehen dieser zumindest bereichsweise zugeordnet ist.

4. Bauteil nach einem der vorhergehenden Ansprüche, **dadurch gekennzeichnet, daß** das schalldämpfende Element (4) als einteiliger Kreisring (14) ausgeführt ist.

5. Bauteil nach einem der Ansprüche 1 bis 3, **dadurch gekennzeichnet, daß** das schalldämpfende Element (4) als Kreisringsegment (16) ausgeführt ist, so daß mehrere schalldämpfende Elemente (4) bzw. Kreisringsegmente (16) der zumindest einen freien Oberfläche (3) zugeordnet sind.

6. Bauteil nach einem der vorhergehenden Ansprüche, **dadurch gekennzeichnet, daß** das schalldämpfende Element (4) aus einem Verbundwerkstoff gebildet ist.

7. Bauteil nach einem der vorhergehenden Ansprüche, **dadurch gekennzeichnet, daß** das schalldämpfende Element (4) aus einem Metallkunststoffverbundwerkstoff, bevorzugt aus einem Metall-Gummi-Verbundwerkstoff gebildet ist.

8. Bauteil nach einem der vorhergehenden Ansprüche, **dadurch gekennzeichnet, daß** das schalldämpfende Element (4) mit der zumindest einen freien Oberfläche (3) verbunden, bevorzugt verklebt, ist.

9. Bauteil nach einem der vorhergehenden Ansprüche, das als Schwungrad eines Verbrennungsmotors ausgeführt ist.
